# EUROPEAN PATENT APPLICATION

(11) **EP 3 839 896 A1**
(43) Date of publication of application: **23.06.2021**
(21) Application number: 19217445.6
(22) Date of filing: 18.12.2019
(51) Int. Cl.: G07B 15/02, G06F 15/76

(54) **MANAGEMENT AND CONTROL SYSTEM FOR A PARKING LOT**

(71) Applicant: Came Parkare Group S.L., 08110 Montcada i Reixac (ES)
(72) Inventor: BERTO, Renato, 10030 RONDISSONE (IT)
(74) Representative: Savi, Massimiliano

(57) **Abstract**

A management and control system for a parking lot provided with a first subsystem including all the parking terminals of the parking lot, a second subsystem including at least one parking controller associated to and adapted to manage and overview the parking terminals of the parking lot, and a third subsystem comprising a remote server and a remote data base associated to said parking controller and said parking terminals through a connection network. The management and control system is further provided with means for collecting the relevant data and information from said parking terminals and for storing said relevant data and information in the remote database, making it available for maintenance purposes and for initial settings of the replacement terminal modules.

## Description

### BACKGROUND OF THE INVENTION

The subject matter of the present disclosure relates to a management and control system for a parking lot.

Parking lots or car parks or car lots are cleared areas that are intended for parking vehicles. Modern remotely attended parking lots are highly automated and provided with access control and control systems adapted to manage the one or more automatic cashiers (a.k.a. POF - Pay On Foot) and the one or more entry and exit terminals of the parking lot area, and to interface with users who need to enter the parking lot with their car, or collect their vehicle and pay the fee for keeping their vehicle in the parking lot for a certain amount of time, and then exit the parking lot once the payment has been done.

Said control systems may be of different kind. Most common layout includes a plurality of terminals, each provided with user interfaces, and at least one parking control unit connected to said terminals and adapted to manage and overview them. This parking control unit is in charge of centralizing all the operations carried out on the terminals as well as compiling all the information they generate. Through its user interface (UI), an operator can, among other things, perform actions on the terminals, visualise their status, change their behaviour, manage customer complaints or request reports on parking activity. Furthermore, the parking controller is important to check the operating status of the connected terminals and their devices, to diagnose failures and to eventually signal the need for maintenance to the operator in charge of supervising the parking lot operation.

Typical examples of parking lot terminals include entry stations, generally provided with automated gates and at least one payment machine.

The automatic cashier is configured to interface with a user with multiple peripherals: a TFT screen, a touchscreen, a microphone and a loudspeaker are normally present in order to communicate instructions to a user, or to allow an user to communicate with a remote operator; a reader, (with magnetic stripe or QR code technology) to read and validate the tickets; an RFID interface, a magnetic or chip payment card reader and a contactless payment card reader are present together with bills and coins acceptors in order to accept payments from a user.

Entry and exit terminals are generally equipped with actuators configured to open and close doors or barriers or gate arms, to let vehicles and users enter or exit the parking lot area. Furthermore, automated gates may comprise a simple user interface comprising at least a ticket printer or a ticket reader and a TFT screen. Opening a parking lot gate arm when entering or leaving a parking area typically requires the user to press a button to print a parking ticket, then remove that ticket from the printer throat to cause the parking gate arm to open. In more general terms a parking ticket can be physical or virtual in the case that entry and exit of the parking is fully electronic (e.g. Payment TAG Reader, Payment by License Plate etc.). In the case of virtual ticket it is not necessary to collect the ticket for the barrier to open and the gate will open automatically without any action by the user.

If a payment has been made by the user, when the ticket reader will read the paid ticket the parking gate will open. In case of virtual ticket, the barrier opens automatically when the payment has been successfully checked.

Both automatic cashier (POF) and entry and exit terminals are provided with wired or wireless communication means to connect to one or more remote control system, for instance within a server - client architecture.

The management of the technical infrastructure of automated remotely attended parking lots is difficult due to the many interfacing parts and components of the system. Both payment machines and automated gates are characterized by a complex structure, their maintenance therefore requires trained technicians and maintenance intervention after a failure may require some down time before the system is up and running again.

It is clear that, in highly automated parking lots and especially in large and busy automated parking lots, down time can represent a huge problem: users not being able to collect or park their vehicles, long lines of cars trying to enter or exit the parking lot.

To avoid down times the parking lot control systems and terminals may be designed with a redundant, fail-safe architecture. This will reduce down times but it will increase the cost of the parking lot equipment to a level which is not affordable.

The performance and the reliability of these highly automated parking lot control systems are getting more and more important and represent critical requirements to be met. Therefore, failures needs to be handled in the most efficient way.

In fact, an accurate detection of a failure and the consequent quick maintenance intervention - performed by non-trained technicians - would avoid incurring large downtime costs and produce huge savings. What is needed are, therefore, improved anomaly detection systems and methods for diagnosing current problems, and modular system architectures configured to easily spot the failure location and allow an easy replacement of the failing component within the system.

### BRIEF DESCRIPTION OF THE INVENTION

Embodiments of the present disclosure therefore relate to a control system for a parking lot.

The control system is configured to allow the maintenance of the single parts of the system in a simplified manner that can be performed by the parking lot staff without intervention of trained technical support.

The hardware architecture of the management and control system according to the present disclosure comprises three levels: the first level is made by all the terminals that are usually installed in a highly automated parking lot: parking payment machines and automated gates. All the terminals of said first level are provided with a modular hardware structure wherein every modular component is separated from the others and provided with means to allow easy plug-in and unplug of said component from said terminal. For example, in a typical parking lot installation, the functional components configured as a module can be the processing unit including the CPU, the climatic module, the intercom module, the QR module, the TFT module, the RFID module, the EMV module including PinPad & Reader, the EMV module for contactless payments, the printer module etc. Said means to allow easy plug-in and unplug of the modules from said terminals may include providing each module with a separate housing and connectors for connecting the modules to a common mainboard. Preferably, robust connectors based on Poka-Yoke concept are chosen to avoid wrong connections between modules. Furthermore, the module's connections are preferably located on a Patch Panel in order to allow a very easy maintenance of the cables without touching the inside of the modules.

Parking payment machines comprise multiple peripherals, for instance: a TFT screen, a touchscreen, a microphone and a loudspeaker to communicate instructions to a user or to allow an user to communicate with a remote operator; a reader, (with magnetic stripe or QR code technology) to read and validate the tickets; an RFID interface, a magnetic or chip payment card reader and a contactless payment card reader together with bills and coins acceptors to accept payments from a user.

Automated gates include entry and exit terminals and are generally equipped with actuators configured to open and close doors or barriers or gate arms to let vehicles and users enter or exit the parking lot area and with a simple user interface comprising at least a ticket printer or a ticket reader a TFT screen and optionally a touchscreen.

The second level of the architecture of the control system according to the present disclosure includes the parking controller associated to and adapted to manage and overview said parking payment machines and said automated gates. The parking controller is connected to all the parking terminals - comprising payment machines and automated gates - through wired or wireless communication means, for instance within a server-client architecture, and it is configured to supervise and manage said terminals.

The third level of the architecture of the control system according to the present disclosure includes a remote server and data base associated to said parking controller through a connection network like the Internet. Said remote server is preferably provided with an accessible interface, for example a web interface, for a user to connect from remote and have access to the parking controller. Furthermore, in a preferred embodiment of the control system according to the present disclosure, said remote server can be configured to be connected and associated to a plurality of parking controllers in order to manage several parking lots in different locations.

In one embodiment, the control system according to the present disclosure comprises software means for detecting and identifying the modules of all the parking lot terminals; software means for collecting all the relevant data and information from all the parking lot terminals, for storing said relevant data and information in a database and for keeping all the collected relevant data and information regarding the configuration and status of the system modules synchronized and updated; software means for generating warnings of certain predetermined events from the modules of all the parking lot terminals. Said relevant information and said warnings may include: unique ID of each monitored module (that allows to know the properties of the module such as manufacturer, serial number, version, firmware etc.); the location of each monitored module; the module traceability including list of previous locations where the module has been installed; the activity logs of operation of each module (said logs being an official record of all the events connected to that module); alerts regarding the need of planned maintenance for the installed modules; alerts regarding faults and malfunction of the installed modules etc.

Said relevant data and information is saved and backed-up on the remote server and data base of the third level of the architecture of the control system according to the present disclosure. When a module of the system is replaced, the information stored in said remote server and data base is restored, in order to promptly and automatically configure the new module to perform exactly as the replaced one.

Furthermore, the control system according to the present disclosure comprises software means for collecting all the logs which are generated during the operation of the parking lot terminals, and means for storing said logs on the remote server and data base of the third level of the architecture of the control system according to the present disclosure. When a malfunctioning occurs in a module of a terminal of the parking lot and there is the need for checking the logs related to said module to repair the malfunctioning, said logs are all available in a single location (the remote server and data base) allowing for a quicker and more efficient solution of the ongoing problem. All the logs will be saved in a centralized location by said remote server and data base and it will be possible to search and browse said logs through said web interface connected to said remote server.

### BRIEF DESCRIPTION OF THE DRAWINGS

Aspects of the present invention will become more apparent from the following description of exemplary embodiments to be considered in conjunction with accompanying drawings wherein:

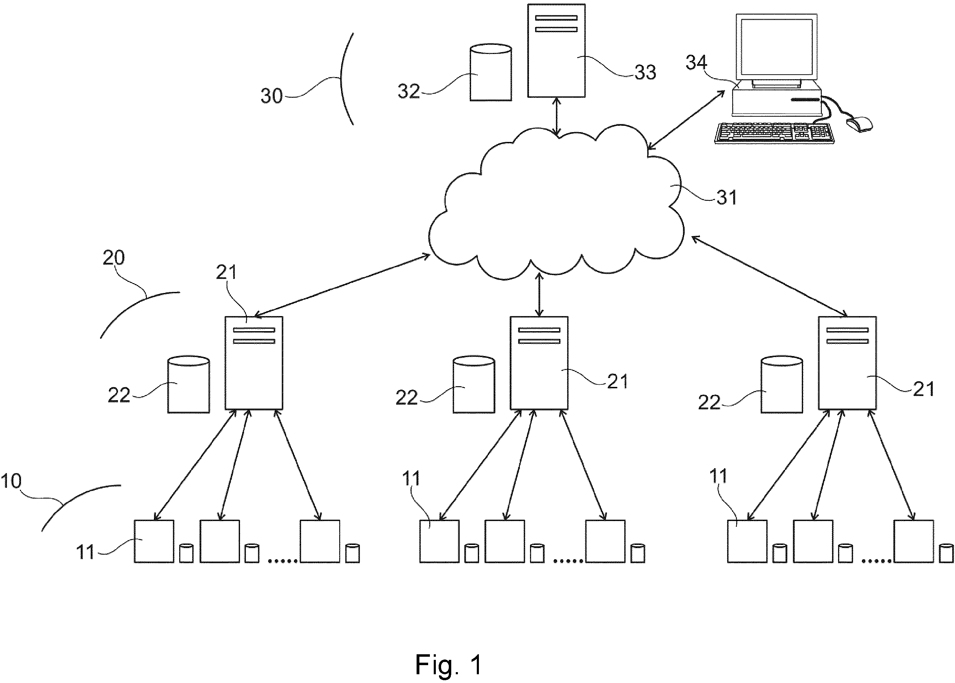

Fig. 1 shows the hardware architecture of the control system according to the present disclosure comprising three levels.

The following description of exemplary embodiments refer to the accompanying drawings. The same reference numbers in different drawings identify the same or similar elements. The following detailed description does not limit the invention. Instead, the scope of the invention is defined by the appended claims.

### DETAILED DESCRIPTION OF THE INVENTION

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

In highly automated parking lots down time due to failure or maintenance can represent a huge problem: users not being able to collect or park their vehicles, long lines of cars trying to enter or exit the parking lot.

To avoid down times the parking lot control systems and terminals may be designed with a redundant, fail-safe architecture but the cost for a sufficient redundancy would increase the overall cost beyond acceptable limits.

Therefore the performance and the reliability of highly automated parking lot control systems need to be improved in order to reduce down times and the cost of maintenance.

The management and control system for a parking lot according to the present disclosure provides an accurate detection of failures and makes the maintenance intervention quick and performable by non-trained technicians, thus avoiding large downtime costs and producing huge savings.

With reference to enclosed Fig. 1, the hardware architecture of the management and control system for a parking lot according to the present disclosure comprises three levels 10, 20, 30: the first level 10 comprises all the parking terminals 11 that are usually installed in a highly automated parking lot: the parking payment machines and the automated gates regulating the entry and the exit to and from the parking lot.

The parking payment machines may comprise multiple peripherals, for instance: a TFT screen, a touchscreen, a microphone and a loudspeaker to communicate instructions to a user or to allow an user to communicate with a remote operator; a reader, (with magnetic stripe or QR code technology) to read and validate the tickets; an RFID interface, a magnetic or chip payment card reader and a contactless payment card reader together with bills and coins acceptors to accept payments from a user.

The automated gates comprise the parking lot entry and exit terminals. Said terminals are generally equipped with actuators, configured to open and close doors or barriers or gate arms to let vehicles and users enter or exit the parking lot area, and with a simple user interface comprising at least a ticket printer or a ticket reader and a TFT screen.

All the terminals 11 of said first level 10 are provided with a modular hardware structure and comprise a plurality of modules. Every module is distinguished and separated from the other modules, provided with identification means and with means to allow easy plug-in and unplug of said component from said terminal.

Thus, in a typical parking lot installation, the functional components configured as separated modules can be the processing unit, including the CPU, the climatic module, the intercom module, the QR module, the TFT module, the RFID module, the EMV module including PinPad & Reader, the EMV module for contactless payments, the printer module etc.

Said means to allow easy plug-in and unplug of the modules from said terminals may include providing each module with a separate enclosure and connectors for connecting the modules to a common mainboard. Preferably, robust connectors based on Poka-Yoke concept are chosen to avoid wrong connections between modules. Furthermore, the terminal connections of said hardware modules are preferably located on a patch panel in order to allow a very easy maintenance of the cables without touching the inside of the modules. Each and every module of said plurality of modules is therefore provided with an enclosure comprising anti-tampering means. Said anti-tampering means may comprise a tamper evident RFID or QR label. Furthermore, the enclosure may be made of plastic or metallic materials. If made of plastic the enclosure can be made through injection or thermoforming processes.

Said module identification means preferably comprise an internal electronic UID (Unique ID) adapted to uniquely identify at least the type and serial number of the module it refers to.

The second level 20 of the hardware architecture of the management and control system for a parking lot according to the present disclosure includes the parking controller 21 associated to and adapted to manage and overview said parking payment machines and said automated gates. The parking controller 21 is connected to all the parking terminals 11 - comprising payment machines and automated gates - through wired or wireless communication means, for instance within a server-client architecture, and it is configured to supervise and manage said terminals 11.

The third level of the architecture of the control system according to the present disclosure includes a remote server 33 and data base 32 associated to said parking controller 21 through a connection network 31 like e. g. the Internet. Said remote server 33 is preferably provided with an accessible interface, for example a web interface, for a user 34 to connect from remote and have access to the parking controller. Furthermore, in a preferred embodiment of the control system according to the present disclosure, said remote server 33 can be configured to be connected and associated to a plurality of parking controllers 21 in order to manage several parking lots in different locations.

The management and control system according to the present disclosure preferably further comprises software means for detecting and uniquely identifying the modules of all the parking lot terminals 11; software means for collecting all the relevant data and information from all the parking lot terminals 11 and for storing said relevant data and information in a remote database 32.

Said data and information regarding the configuration and status of the terminal modules are kept backed-up and updated in order to reflect the current configuration of the terminals 11. This feature can be easily achieved e.g. by configuring said means for collecting all the relevant data and information from all the parking lot terminals 11 to operate in real time or periodically with a predetermined frequency of operation.

Furthermore, the control system according to the present disclosure may comprise software means for processing said relevant data and information to generate warnings of certain predetermined events from the modules of all the parking lot terminals 11.

Said relevant data and information may include: unique ID of each monitored terminal module (that allows to know the properties of the module such as e.g. manufacturer, serial number, version, firmware etc.); the location of each monitored terminal module; the terminal module traceability including a list of previous locations where the terminal module has been installed; the activity logs of operation of each terminal module (said logs being an official record of all the events connected to that module);

Said warnings may comprise e.g. alerts regarding the need of planned maintenance for the installed terminal modules; alerts regarding faults and malfunction of the installed terminal modules etc.

Being said relevant data and information saved and backed-up on the remote server 33 and data base 32 of the third level of the architecture of the control system according to the present disclosure, when a terminal module of the system is replaced, the information stored in said remote server 33 and data base 32 is automatically restored, in order to promptly and automatically configure the new module to perform exactly as the replaced one.

The management and control system according to the present disclosure may further comprise software means for collecting all the logs which are generated during the operation of the parking lot terminals 11, and storing said logs on the remote server 33 and data base 32 of the third level of the architecture of the control system according to the present disclosure. When a malfunctioning, in particular a software-related malfunctioning, occurs in a module of a terminal 11 of the parking lot and there is the need for checking the logs related to the software of said module to troubleshoot and repair the malfunctioning, said logs will be available in said remote server 33 and data base 32, thus allowing for a quicker and more efficient solution of the ongoing issue. Being the remote server 33 preferably provided with an accessible interface, for example a web interface, all the saved logs will be searchable through said web interface and it will be possible to group said logs e.g. by unique transaction identifier, thus allowing to browse all the logs-related information independently of the location where it has been generated. Furthermore said logs can be filtered by any key: date, origin, severity level etc. allowing for a quick analysis and intervention.

In a preferred embodiment, said means for collecting the relevant data and information from said parking terminals 11 and for storing said relevant data and information in said remote database 32 comprise a first software module loaded in the terminal 11 and adapted to collect all the logs and relevant information from said terminal 11. Said first software module is configured to collect said logs and information for instance through a SOAP (Simple Object Access Protocol). Said first software module is further configured to send all the logs and information collected from the terminal 11 to the parking controller 21. In case of temporary failure of the connection between the terminal 11 and the parking controller 21, said first software module is configured to store all the collected data in a local queue in a database associated to the terminal 11. After the connection between the terminal 11 and the parking controller 21 is re-established, the first software module will send all queued data to the parking controller 21.

Said means for collecting the relevant data and information from said parking terminals 11 and for storing said relevant data and information in said remote database 32 further comprise a second software module loaded in the parking controller 21 and adapted to: collect the logs and the relevant data and information from all the terminals 11 and from said parking controller 21 and to selectively send the collected data and information to said remote server 33.

In further detail, in a preferred embodiment said second software module further comprises: a Filter-Multiplex module, adapted to select the required information to be delivered to said remote server 33; a Subscription module adapted to receive instructions from said remote server 33 regarding the location (parking controller 21 or remote server 33) where to save the collected logs, provide instructions to said Filter-Multiplex module on what data and information to filter out, and send to the remote server 33 the logs, data and information indicated by the Filter-Multiplex module.

In case of temporary failure of the connection between the parking controller 21 and the remote server 33, said second software module is configured to store all the collected data in a local queue in a database associated to the parking controller 21. After the connection between the terminal 11 and the parking controller 21 and the remote server 33 is re-established, the second software module will send all queued data to the remote server 33.

Said means for collecting the relevant data and information from said parking terminals 11 and for storing said relevant data and information in said remote database 32 further comprise a third software module loaded in the remote server 33 and adapted to collect and store on said remote database 32 all the logs and relevant information from said parking controller 21.

## Claims

1. A management and control system for a parking lot, the system comprising:
a first sub-system (10) comprising the parking terminals (11) of said parking lot including the payment machines and the automated gates of said parking lot, said parking terminals (11) being provided with a modular hardware structure wherein every hardware module is separated from the others and provided with means to allow easy plug-in and unplug of said hardware module from said parking terminal (11);
a second sub-system (20) comprising at least one parking controller (21) associated to and adapted to manage and overview parking terminals (11) of said parking lot;
a third sub-system (30) comprising a remote server (33) and a remote data base (32) associated to said parking controller (21) and said parking terminals (11) through a connection network (31);
means for detecting and identifying the hardware modules of said parking terminals (11);
means for collecting the relevant data and information from said parking terminals (11) and for storing said relevant data and information in said remote database (32);
means for configuring the hardware modules of said parking terminals (11) with said relevant data and information in said remote database (32).

2. The management and control system according to the preceding claim further comprising means for processing said relevant data and information to generate warnings of a set of predetermined events related to the hardware modules of said parking terminals (11).

3. The management and control system according to the preceding claim **characterized in that** said predetermined events are chosen in a group comprising alerts regarding the need of planned maintenance for the installed modules; alerts regarding faults and malfunction of the installed modules.

4. The management and control system according to one or more of the preceding claims **characterized in that** said remote server (33) is provided with an accessible interface for a user (34) to connect from remote and have access to said parking controller (21).

5. The management and control system according to the preceding claim **characterized in that** said interface is a web interface.

6. The management and control system according to one or more of the preceding claims **characterized in that** said means for collecting the relevant data and information from said parking terminals (11) and for storing said relevant data and information in said remote database (32) are configured to keep the collected relevant data and information from said parking terminals (11) synchronized and updated.

7. The management and control system according to one or more of the preceding claims further comprising means for collecting the logs generated during the operation of said parking terminals (11) and for storing said logs in said remote database (32).

8. The management and control system according to one or more of the preceding claims **characterized in that** said relevant data and information is chosen in a group comprising: ID, location, traceability and activity logs of operation of each monitored terminal module.

9. The management and control system according to one or more of the preceding claims **characterized in that** said means to allow easy plug-in and unplug of said hardware module from said terminal (11) comprise providing each module with a separate enclosure and connectors for connecting the modules to a common mainboard.

10. The management and control system according to the preceding claim **characterized in that** said connectors are Poka-Yoke type connectors.

11. The management and control system according to one or more of the preceding claims 9 and 10 **characterized in that** said separate enclosure comprises anti-tampering means.

12. The management and control system according to one or more of the preceding claims **characterized in that** said hardware modules comprise terminal connections located on a patch panel.

13. The management and control system according to one or more of the preceding claims **characterized in that** said means for collecting the relevant data and information from said parking terminals (11) and for storing said relevant data and information in said remote database (32) comprise: a first software module loaded in the terminal (11) and adapted to collect all the logs and relevant information from said terminal (11), a second software module loaded in the parking controller (21) and adapted to collect the logs and the relevant data and information regarding all the terminals (11) and the parking controller (21) and to selectively send the collected data and information to said remote server (33); a third software module loaded in the remote server (33) and adapted to collect and store on said remote database (32) all the logs and relevant information regarding all the terminals (11) and the parking controller (21).
